# EUROPEAN PATENT APPLICATION

(11) **EP 4 715 563 A1**
(43) Date of publication of application: **25.03.2026**
(21) Application number: 25202668.7
(22) Date of filing: 17.09.2025
(51) Int. Cl.: G06F 3/12

(54) **METHOD FOR CONTROLLING INFORMATION PROCESSING DEVICE, INFORMATION PROCESSING DEVICE AND COMPUTER-READABLE STORAGE MEDIUM**

(30) Priority: 24.09.2024 JP 2024165651
(71) Applicant: CANON KABUSHIKI KAISHA, Ohta-ku Tokyo 146-8501 (JP)
(72) Inventor: AKADO, Yukinobu, Tokyo (JP)
(74) Representative: WESER & Kollegen Patentanwälte PartmbB

(57) **Abstract**

A device receives designation of a size of an image to be output; in a case where the designated size is a predetermined size and the image is a target of margin removal processing, arranges a drawing region obtained by excluding a margin from the image using a first position as a reference point, the first position being located inward from an end of an output sheet by an amount corresponding to a predetermined print margin; and in a case where the designated size is the predetermined size and the image is not a target of the margin removal processing, arranges the image using a second position as a reference point, the second position being an intersection between a first side of the output sheet in a conveyance direction and a second side of the output sheet orthogonal to the first side.

## Description

### TECHNICAL FIELD

The present disclosure relates to a method for controlling an information processing device, an information processing device and computer-readable storage medium for removing an unnecessary margin in printed matter to save paper used.

### BACKGROUND

Job submission software that handles a plurality of print jobs performs printing by efficiently executing many jobs. When a plurality of print files are output, the print files may have different output sizes, but even in such a case, it is required to collectively print the files on respective output sheets corresponding to their output sizes with simple processing. There are various types of output, and examples of the output of a large-sized printer include drawings, posters, and photographs, and job submission software needs to efficiently output those different types of output mainly using rolled paper.

Japanese Patent No. 6354372 discloses a method for moving image data such that an image formation start position of image data from which an input upper end margin and an input left end margin have been removed coincides with an origin of an image data region set in advance on a recording medium. With this method, an upper end margin and a left end margin included in the original image data are removed from an image formed in the image data region.

### SUMMARY

However, the invention disclosed in Japanese Patent No. 6354372 has a problem in that, depending on the value of a set margin, which determines the origin of the image data region, i.e., depending on the position of the origin of the image data region, a portion of the image data is arranged in a part (print margin) outside a print region where the image formation is performed, and the printed image lacks a portion thereof.

The present disclosure in its first aspect provides a method for controlling an information processing device as specified in claim 1. Optional features are specified in claim 2 to 7.

The present disclosure in its second aspect provides an information processing device as specified in claim 8.

The present disclosure in its third aspect provides a computer-readable storage medium as specified in claim 9.

With the above configuration, it is possible to save paper by removing an unnecessary margin from printed matter, while preventing missing of a part of an image region.

Features of the present disclosure will become apparent from the following description of embodiments with reference to the attached drawings. The following description of embodiments is described by way of example.

### BRIEF DESCRIPTION OF THE DRAWINGS

FIG. 1 shows an example of hardware configurations of a PC 100 and an image output device 101.
FIGS. 2A to 2D show an example of a display screen of an application for executing printing.
FIG. 3 shows an example of print setting information included in print jobs.
FIG. 4 shows an example of a flow in which a print job is created by a print application by removing a margin to save paper.
FIGS. 5A and 5B show example arrangements of a drawing area corresponding to respective output sizes.
FIG. 6 schematically shows an example of a colored rectangular region 602.
FIG. 7 shows an example in which paper is saved by removing a margin.
FIG. 8 shows an example in which paper is saved by removing a margin in Embodiment 2.
FIG. 9 shows an example of a flow in which a print job that saves paper by removing a margin is created by the print application in Embodiment 2.

### DESCRIPTION OF THE EMBODIMENTS

Hereinafter, an embodiment of the present disclosure will be described in detail with reference to the drawings. Note that the present embodiment is merely an example, and specific examples of constituent components, processing steps, display screens, and the like are not intended to limit the scope of the present invention unless otherwise specified.

### <Embodiment 1>

### System Configuration

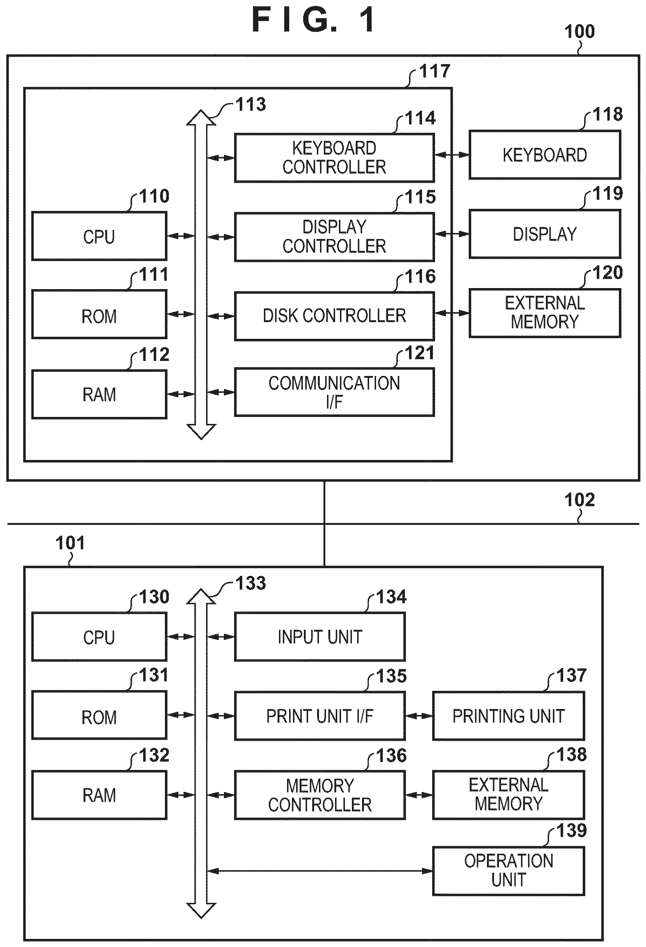

First, the following describes a system configuration according to the present embodiment. A system according to the present embodiment is constituted by a PC 100 in which a print application has been installed, and one or more image output devices 101 shown in FIG. 1. These are connected via bus communication using a USB, for example, or network communication using a network 102, for example. Note that a print application program may also be referred to as "job submission software" or a "print application".

FIG. 1 shows an example of hardware configurations of the personal computer (PC) 100 and the image output device 101 constituting an image output system. The PC 100 may also be referred to as an "information processing device", and the image output device 101 may also be referred to as an "image forming device", a "printer", or a "printer device".

First, the following describes the image output device 101. The image output device 101 is controlled by a CPU 130. The CPU 130 may also be referred to as a "processing unit" or a "control unit". The CPU 130 operates based on a program and the like stored in a program ROM in a ROM 131 or a program and the like stored in an external memory 138.
These programs include the print application. The CPU 130 outputs an image signal as output information via a system bus 133 to a printing unit 137 that is connected to a printing unit interface (I/F) 135. The CPU 130 can process communication with the PC 100 via an input unit 134, and notify the PCs of information held in the image output device 101. Also, the CPU 130 can receive output data to be output to the printing unit 137 via the input unit 134. Note that the input unit 134 may be a communication I/F (i.e., a communication unit) for LAN or the like, and is connected to the communication network 102 to which the PC 100 is connected as well. The input unit 134 may output a signal to a communication partner such as the PC 100.

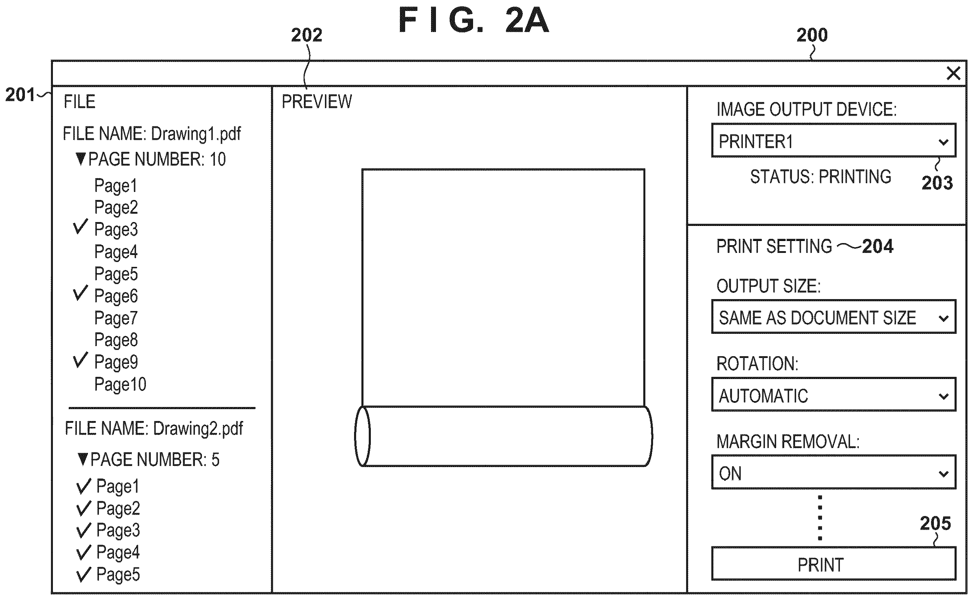

A RAM 132 is a memory that functions as a main memory or a work area for the CPU 130, for example, and is configured such that its memory capacity can be increased by an optional RAM connected to an add-on port (not shown). Note that the RAM 132 is used as an output information developing region, an environmental data storage region, a nonvolatile memory, or the like. Access to the external memory 138 such as a hard disk (HDD) or an IC card is controlled by a memory controller 136. The external memory 138 can be optionally connected, and stores font data, an emulation program, form data, information regarding sheets registered in the image output device, attribute information of the sheets, and the like. An operation unit 139 includes an operation panel, can display various types of information such as a user interface screen shown in FIGS. 2A to 2D, and accepts input from a user.

Next, the following describes the PC 100.
The inside 117 of the computer includes a CPU 110, a ROM 111, a RAM 112, a keyboard controller 114, a display controller 115, a disk controller 116, and a communication I/F 121. The CPU 110 may read a control program or the like from the ROM 111. The CPU 110 may be a dedicated circuit such as an ASIC. The CPU 110 and a dedicated circuit are examples of a hardware circuit or a hardware processor. Similarly to the CPU 100, the CPU 110 may also be referred to as a "processing unit" or a "control unit". The disk controller 116 controls access to an external memory 120 such as an HD, a CD-ROM, a DVD-ROM, a USB, or the like. The RAM 112 is configured such that its capacity can be increased by an optional RAM (not shown), for example, and is a memory that is mainly used as a work area for the CPU 110. The keyboard controller 114 controls key input from a keyboard 118 or a pointing device (not shown). The display controller 115 controls display on a display 119. The communication I/F 121 is connected to the communication network 102 and controls communication with an external device that can communicate with the PC 100. In the embodiment of the present disclosure, the CPU 110 controls each unit connected to a main bus 113 via the main bus 113, unless otherwise stated.

### Display Screen and Print Setting of Print Application

FIGS. 2A to 2D show an example of a display screen that is displayed when the print application installed in the PC 100 is executed. In a main screen 200 of the print application, the name of an output data file (which is called a print target file) that is a print target and the configuration of pages included in the file are displayed in a file display section 201. The print target file may be selected as a parameter when the print application is executed, or may be selected by the user by designating the file name in the file display section 201. A configuration is also possible in which the file names of files stored in a predetermined folder are displayed as candidates in a pop-up, for example, and the print target file can be selected from the candidates.

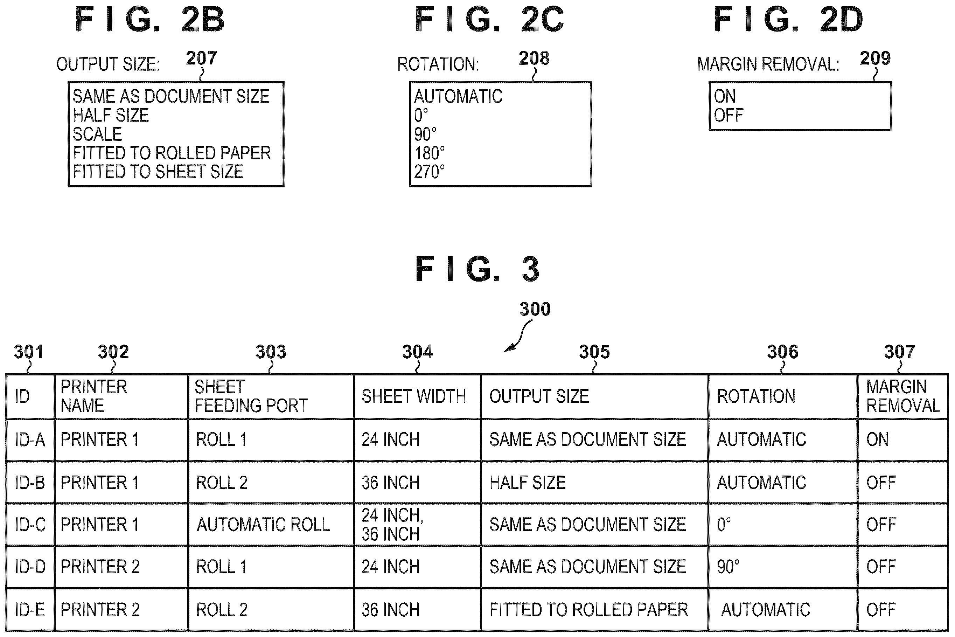

A preview display section 202 displays a print preview of each page of the selected print target file displayed in the file display section 201. The content of each page is referred to as an" image" or a "document", and data of the content is referred to as "image data" or "document data". Pages included in document data are referred to as "document pages", and data corresponding to the document pages is referred to as "document page data". Also, an image output device to which a print job is transmitted can be selected in an image output device designation section 203, and the name of a selected image output device is displayed therein. Each item included in print settings can be selected from alternatives in a print setting section 204, for example, and various selected print setting items are displayed therein. The print setting section 204 includes an output size designation section 207 (FIG. 2B) for setting an output size, a rotation designation section 208 (FIG. 2C) for designating rotation of the document, and a margin removal designation section 209 (FIG. 2D) for designating removal of unnecessary margins in printed matter, for example. Examples of setting values that are set for the respective setting items are shown in FIG. 3, which will be described later. When the user operates the print setting section 204 to change a print setting, a preview obtained by applying the changed print setting to the print target file is displayed in the preview display section 202. One or more pages are displayed at the same time in the preview display section 202, and previews of pages that are not displayed can be displayed using a page forward button or a page reverse button (not shown). Thus, the user can check a preview of output that corresponds to the print settings and will be formed on a sheet by the image output device shown in the image output device designation section 203, and accordingly, it is possible to prevent a print failure.

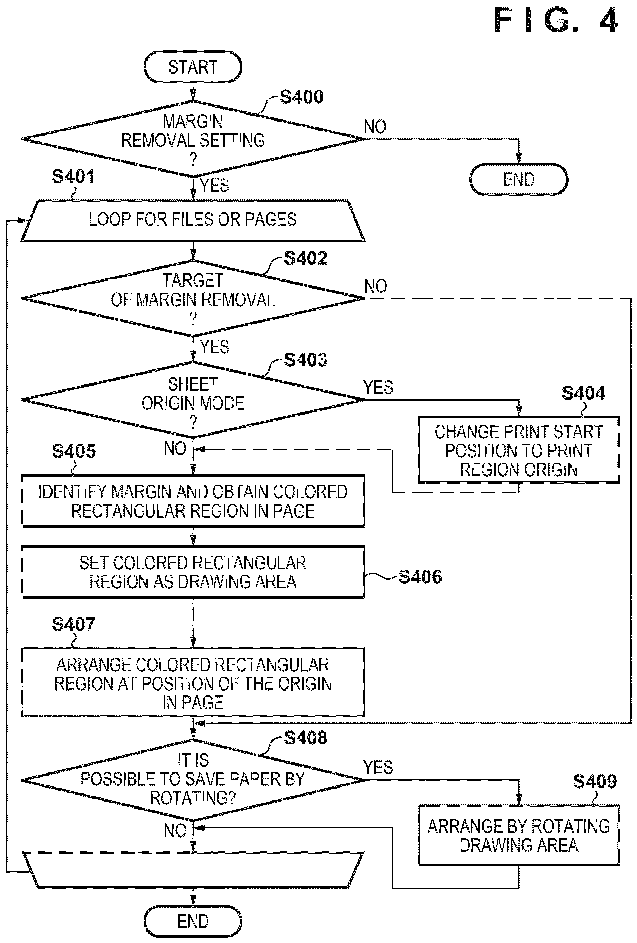

A print button 205 is a button for giving an instruction to start printing. In response to the print button 205 being pressed, the CPU 110 creates a print job including print setting information from a print target file in accordance with print settings designated in the print setting section 204, and transmits the created print job to the image output device shown in the image output device designation section 203. Note that pressing a button means, for example, clicking or tapping a button displayed on a display panel. The print settings designated in the print setting section 204 displayed in the user interface shown in FIG. 2A are temporarily stored and are referred to in a procedure shown in FIG. 4, for example. Also, in response to the print button 205 being pressed, those print settings are stored as print setting information, an example of which is shown in FIG. 3.

FIG. 3 shows an example of print setting information 300 included in a print job created by the print application executed by the CPU 110, i.e., created by the CPU 110 in response to the print button 205 being pressed by the user. Although FIG. 3 shows print setting information regarding a plurality of jobs, print setting information regarding a single job may be created in response to each print instruction, and the created print setting information may be additionally recorded in the print setting information 300. The print setting information 300 includes ID 301 that is identification information of a print job, printer name 302 indicating an image output device to which the print job is output, sheet feeding port 303, sheet width 304 set for the sheet feeding port 303, output size 305, rotation setting 306, and margin removal setting 307, for example. Other print setting information may be added to the print setting information shown in FIG. 3, or some of the print settings shown in FIG. 3 may be omitted from the print setting information 300. When a print target file is selected and a print instruction is given, the print setting information 300 shown in FIG. 3 is generated, and accordingly, the name of the print target file may be associated with identification information of the print job, although this is not shown.

A value set in the image output device designation section 203 included in the main screen 200 shown in FIG. 2 is recorded and held as the printer name 302 shown in FIG. 3. A configuration is possible in which the sheet feeding port 303 and the sheet width 304 can be set via entry fields (not shown) included in the print setting section 204 on the main screen 200 shown in FIG. 2A. Values set in the output size designation section 207, the rotation designation section 208, and the margin removal designation section 209 shown in the print setting section 204 are recorded and held as the output size setting 305, the rotation setting 306, and the margin removal setting 307, respectively. "Auto" that allows the print application to rate an image as appropriate, or a designated rotation angle is set as the rotation setting 306, for example. A configuration is possible in which the allowed rotation angle is either 0 degrees or 90 degrees, or it is possible to set multiples of 90 degrees. Either "ON" indicating to perform margin removal processing or "OFF" indicating not to perform the margin removal processing is set as the margin removal setting 307.

As described above, settings such as the sheet width, the output size, rotation of an image, and margin removal are recorded as the print setting information 300 with respect to each print job.

### Definition of Print Margin etc.

Here, the term "print margin" etc., used in the present embodiment will be described. A print margin is provided to prevent missing of a part of an image or degradation of image quality that may occur in, for example, an outer peripheral portion of an output sheet due to functional constraints or the like of a printer. The print margin is set for each printer, for example, and is provided to prevent print result defects like those described above. The print margin indicates the minimum value of a margin that is necessary in a document page due to the above-described functional constraints or the like of a printer. The print margin is excluded from a print target page, and the remaining part of the print target page is arranged on an output sheet. Accordingly, with respect to a document page, for example, a part of the document page remaining after the print margin has been excluded is transmitted as the page by the print application to a printer, and the printer performs printing while securing the print margin around the received page.

In the preview display section 202, a document page or a page obtained by removing a margin from the document page is arranged on an output sheet, and a region corresponding to the print margin in the page may be displayed in a manner that makes it possible to identify the print margin, e.g., may be displayed in a specific color. The region corresponding to the print margin is arranged on the output sheet in the displayed preview, but is not transmitted to the printer and will not be printed as described above.

In the present embodiment, the term "margin" is used as a concept that differs from the print margin. The term "margin" refers to a margin included in a document page, and may also be referred to as "in-document margin" or simply "margin". Unless a margin larger than the print margin is provided in a document page, a part of the document page may overlap the print margin when the document page is arranged, and the overlapping part may not be printed.

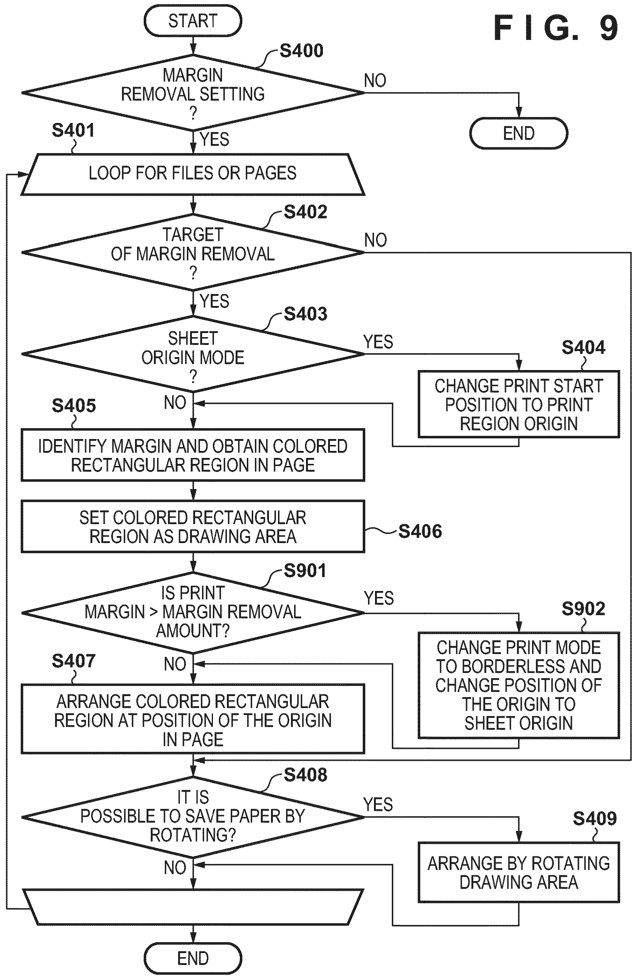

The print margin is set in advance according to the type of the printer, i.e., the image output device, for example, and the print application can obtain the print margin from the printer. Alternatively, a configuration is also possible in which the user can set the print margin in the print application. In procedures shown in FIGS. 4 and 9, which will be described later, a print margin obtained as described above is referred to.

Note that a margin may be set along each of the upper, lower, left, and right sides, and the print margin may also be determined according to each side. Therefore, in order to identify a side to which a margin and the print margin are applied, the margin may be referred to as, for example, an "upper margin" or a "left margin", adding "upper", "lower", "left", or "right" thereto.

Furthermore, in the present embodiment, the upper side and the left side of document data are used as reference when the document data is arranged. The upper side corresponds to a conveyance direction side in image formation performed by the printer, and the left side is orthogonal to the upper side and on the left as viewed in the direction toward the upper side. An intersection between an upper side and a left side of a sheet (output sheet) that is set as the output sheet is referred to as a "sheet origin". Also, an intersection between an upper side and a left side that are shifted inward from the upper side and the left side of the output sheet by an amount corresponding to a print margin is referred to as an "origin with the print margin". A region obtained by excluding the print margin from the region of the set output sheet is referred to as a "print region" or an "image forming region". An intersection between an upper side and a left side of the print region is the origin with the print margin, and accordingly, the origin with the print margin may also be referred to as a "print region origin" or an "image forming region origin".

When a document page or a page obtained by removing a margin from the document page is arranged on an output sheet, the document page or the page is arranged in the print region such that the sides of the document page or the page extend parallel to the sides of the output sheet. At this time, document data is arranged such that an intersection (which is called a document data origin) between an upper side and a left side of the document data coincides with the print region origin or the sheet origin. Which of the print region origin and the sheet origin is selected as the origin with which the document data origin coincides may be set for each job or page, for example, and this setting is referred to as a "page arrangement mode" in the present embodiment. A margin may be removed from the document page in the procedure shown in FIG. 4, for example, and an intersection between an upper side and a left side of document data of the page obtained by removing the margin is also referred to as a "document data origin".

Note that arranging document data using the print application means determining how to arrange the document page on an output sheet, and a determination result is displayed in a preview region of UI, an example of which is shown in FIG. 2, provided by the print application, for example. The finally determined arrangement and print settings of the document page are included as information in a print job created by the print application, the print job is transmitted to the printer and executed, and each page is printed in accordance with the arrangement and the print settings.

### Margin Removal and Rotation Processing of Print Application

FIG. 4 is an example of a flow showing a part of processing executed by the print application, in particular, a part of processing in which the CPU 110 creates a print job that saves paper by removing a margin in the ROM 111 or the RAM 112 by executing the print application. This flow is started at a timing at which the CPU 110 starts to create a print job in response to the print button 205 being pressed by the user, or a timing at which the CPU 110 draws the preview display section 202 again. The timing at which the preview display section 202 is drawn again includes a case where any setting that is included in the print setting section 204 and affects the preview is changed. The procedure shown in FIG. 4 is realized by the CPU 110 by loading a program, e.g., the print application from the external memory 120 into the RAM 112, for example, and executing the program.

First, in step S400, the CPU 110 determines whether or not the margin removal setting 307 is ON, i.e., whether or not the margin removal setting is set for a print target file. If it is determined that the margin removal setting is set, the processing proceeds to step S401, otherwise the processing ends.

In steps from S401 to S409 in this flowchart, determination is performed with respect to each file or each page. In this example, a print job is associated with a print data file, using an identification number of the print job, for example, and the print data file includes one or more pages. Note that a configuration is also possible in which data of a single page constitutes a single file, and one or more files constitute a single job. The processing shown in FIG. 4 is repeated until the CPU 110 finishes the processing on selected pages of the print data file selected in the file display section 201. When the print target file is selected and an execution instruction is given, the output size setting 207 shown in FIG. 2B, the rotation setting 208 shown in FIG. 2C, and the margin removal setting 209 shown in FIG. 2D are referred to, for example.

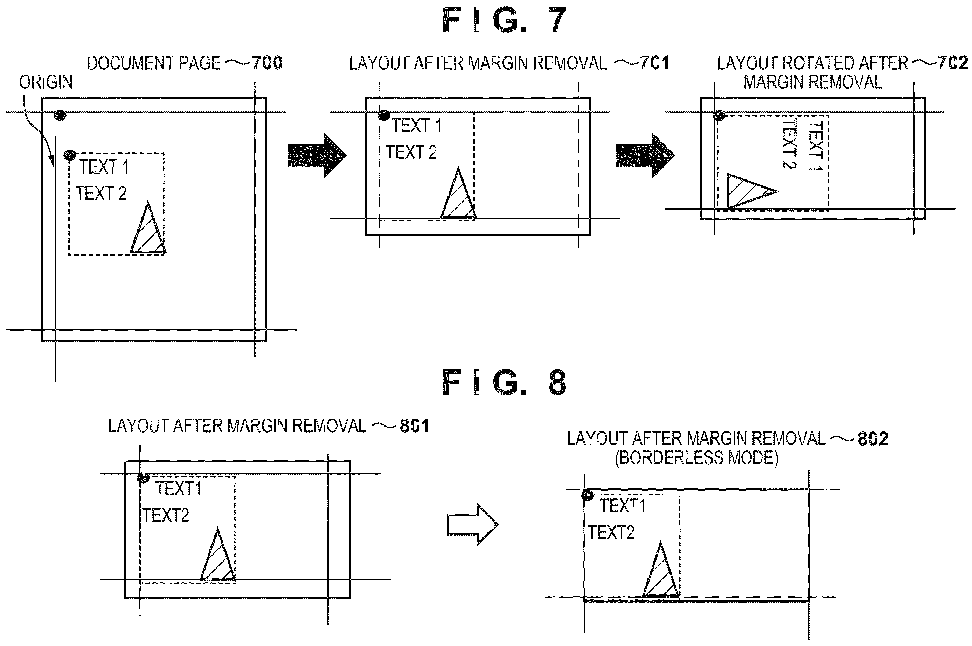

In step S401, the CPU 110 determines whether or not the print target file includes a page that has not been processed, and if there is an unprocessed page, focuses on the page, otherwise ends the processing. Note that each file or each page is arranged as shown by a layout 701 or 702 in FIG. 7, for example. When printing is performed on rolled paper, the paper is cut for each page by the printing unit 137, and accordingly, the second and following pages are also arranged based on the same determination.

In step S402, the CPU 110 determines whether or not the focused file or the focused page is appropriate as a target of margin removal. Note that a margin that is to be removed is a blank region on an outer periphery of a drawing region in which letters or image graphics are drawn. That is, the margin that is to be removed is a margin of a document. For example, if it is determined in step S402 that the focused page (file) is a drawing file (drawing data), it is possible to determine that the focused page (file) is a target of margin removal because it is possible to determine that a blank region is unnecessary for drawings. On the other hand, if the focused page is an image data file, the target of printing is often a photograph or a graphic art, and accordingly, even if there is a margin in the focused page, it is not always appropriate to remove the margin. Therefore, it is possible to determine that an image data file is not a target of margin removal. This is because a photograph or a graphic art design is sometimes composed so as to include a blank region.

A drawing file can be determined based on a file format that is often used to output drawings, for example. For example, it is possible to determine that the focused page is a drawing file based on the fact that the focused page is a PDF file, an HPGL/2 file, or in any other format that is used for a saved file of a drawing output application. In another example, it is possible to adopt a determination method in which the determination is performed if "Auto" is set as the setting value of the margin removal 307 and margin removal is always performed if "ON" is set for the margin removal 307. On the other hand, image data can be determined based on a file format that is used to save image data, such as JPEG or TIFF, or any other file format that is used to save output data of a graphics production application. In any case, the format can be identified based on the file name (e.g., in particular, an extension), and accordingly, the determination in step S402 can be performed based on the file name of the focused file. A configuration is also possible in which whether the focused file is either type of a drawing file and an image file is determined, and if the focused file is not that type of file, it is determined that the focused file is the other type of file. It is also possible to use criteria other than the above criteria to perform the determination in step S402. If the determination result in step S402 is Yes, i.e., if the focused file or page is a target of margin removal, the processing proceeds to step S403, and if the determination result is No, the margin removal processing will not be performed, and the processing proceeds to step S408.

Note that, it is assumed in step S402 that each page to be printed in the print job is an independent file, but a single file may include a plurality of pages, as is the case with a PDF file, for example. In the case of such a file configuration, it is possible to determine the type of the file including the focused page in step S402. For example, in FIGS. 2A to 2D, the print target file is a PDF file named Drawing1.pdf and includes pages 1 to 10. In such a case, in step S402, whether or not each page included in the file is a target of margin removal may be determined based on the file name of the print target file.

In step S403, the CPU 110 determines whether or not the page arrangement mode is a sheet origin mode. The page arrangement mode includes the sheet origin mode in which the page is arranged such that the document page origin coincides with the sheet origin and a margin mode in which the page is arranged such that the document page origin coincides with the print region origin. In the present embodiment, the page arrangement mode is determined according to an output size that is set for the print target file or the document page. In the sheet origin mode, the document page or a page obtained by removing an in-document margin from the document page is arranged such that the document page origin coincides with the sheet origin. On the other hand, in the margin mode, the document page or the page obtained by removing the in-document margin from the document page is arranged such that the document page origin coincides with the print region origin. In step S403, whether or not the page arrangement mode is the sheet origin mode is determined. If it is determined in step S403 that the page arrangement mode is the sheet origin mode, the processing proceeds to step S404, otherwise the processing proceeds to step S405.

Note that the terms "page arrangement mode", "sheet origin mode", and "margin mode" are used for the sake of convenience, and these modes need not be actually used in the print application. For example, if the page arrangement mode is determined according to a setting of the output sheet, the page arrangement mode may be the setting of the output sheet itself. In this case, the sheet origin mode and the margin mode are page arrangements determined according to a setting value of the output sheet.

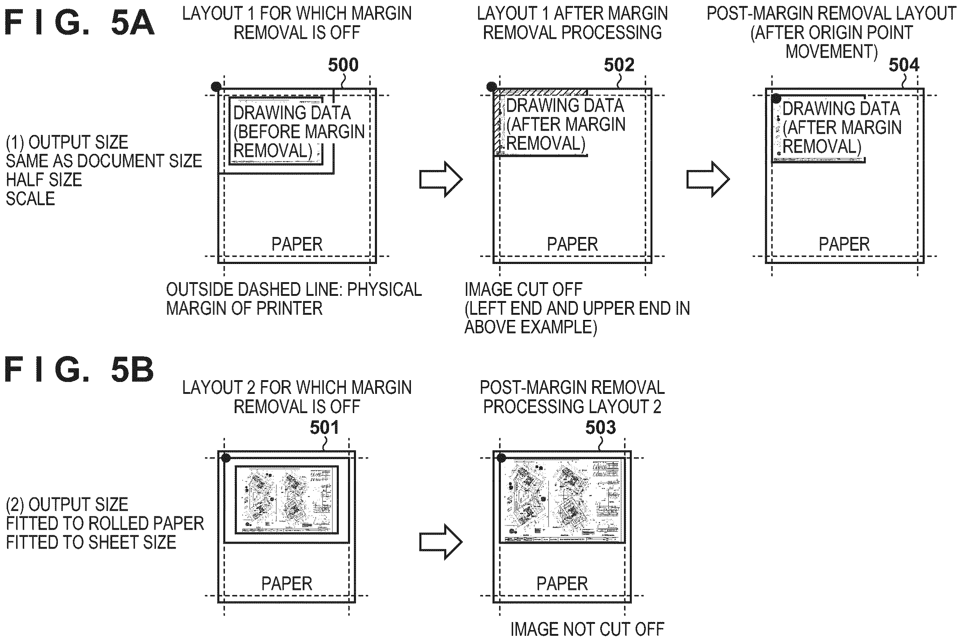

A difference resulting from a difference in a print start position will be described with reference to FIGS. 5A and 5B. If the output size 207 of the print target file is "the same as the document size", "half size" (reduced by 50%), or "scale", for example, the page arrangement mode is the sheet origin mode. In these cases, the determination result in step S403 is Yes, and the processing proceeds to step S404. Note that a configuration is also possible in which the page arrangement mode can be directly designated by the user. If "fitted to rolled paper" or "fitted to sheet size" is selected as the setting value of the output size 207, the page arrangement mode is the margin mode, the determination result in step S403 is No, and the processing proceeds to step S405. As described above, the determination in step S403 is performed based on the output size. Accordingly, in step S403, it is also possible to determine whether the output size 207 of the print target file is any of "the same as the document size", "half size", and "scale" (not shown), or none of these. "The same as the document size", "half size", and "scale" are output sizes based on the document size, and if any of these is set as the output size, the processing branches to step S404. On the other hand, if an output size based on the sheet size, such as "fitted to rolled paper" or "fitted to sheet size" is set, the processing branches to step S405.

In step S404, the CPU 110 changes a print start position of the document page or document data obtained by removing a margin from the document page, i.e., the document page origin from the sheet origin to the print region origin that is inward of the print margin in the sheet as shown by a post-margin-removal-processing layout (after the origin is moved) 504 in FIG. 5. The print region origin may also be referred to as a "first reference position". Alternatively, the first reference position may be further inward than the print region origin. As described above, the position of a reference point to be used to arrange the document data excluding a margin (document page) is determined in the processing performed in steps S403 and S404.

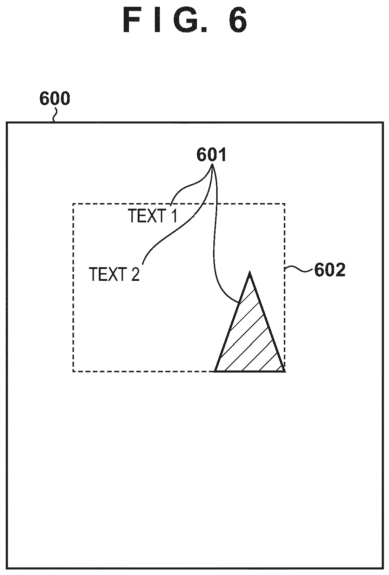

In step S405, the CPU 110 identifies a margin in at least one direction out of the upper, lower, left, and right sides of document data of the focused page, and obtains a colored rectangular region in the page, which is the minimum rectangular region excluding the margin. As described with reference to FIG. 6, the colored rectangular region is the minimum circumscribing rectangle that encompasses all drawing objects in the page, and each page includes a single colored rectangular region. The colored rectangular region constitutes the page obtained by removing the margin from the document page.

In step S406, the CPU 110 sets the obtained colored rectangular region as a drawing area (or a print region) of the page.

In step S407, the CPU 110 arranges the page obtained by removing the margin (i.e., the drawing area) such that the origin of the drawing area set in step S406, i.e., the document page origin coincides with the position of the origin determined in steps S403 and S404. In FIG. 7, a post-margin-removal layout 701 schematically shows the result of processing performed in steps S402 to S407 on a document page 700, which is a page of document data. It can be found that margins, i.e., in-document margins are removed and regions of the sheet used are saved. Also, a print margin is secured, and an image to be printed will not lack any part thereof.

In step S408, the CPU 110 determines whether or not the area of paper used becomes smaller if the drawing area is rotated. When printing is performed on rolled paper, the paper is cut into the size of the printed matter, and accordingly, the consumption of the paper becomes smaller as the length of the printed matter in the conveyance direction becomes shorter. Therefore, an area of paper (an area of sheet) used when the drawing area is not rotated and an area of paper used when the drawing area is rotated by 90 degrees are compared, and it is determined in which case, the area of paper used is smaller. Although the area of paper used is described as an example, it is also conceivable to use another method in which blank regions outside the drawing area are compared. Alternatively, the length in the vertical direction (the conveyance direction) and the length in the horizontal direction (a width direction orthogonal to the conveyance direction) of the focused page may be compared with each other, and if the length in the vertical direction is longer and the rotated focused page is not larger than an output width, it is possible to determine that the paper can be saved by rotating the focused page by 90 degrees. In the present embodiment, the determination regarding rotation is performed, but the determination regarding rotation may be omitted. If it is determined that the paper cannot be saved even if the drawing area is rotated, i.e., if the area of paper used is smaller when the drawing area is not rotated, the processing returns to step S401. In step S401, if there is a file or page that is a target of the processing and has not been processed, the processing is repeated from step S402. On the other hand, if it is determined that the paper can be saved if the drawing area is rotated by 90 degrees, i.e., if the area of paper used becomes smaller when the drawing area is rotated by 90 degrees, the processing proceeds to step S409.

In step S409, the CPU 110 arranges the drawing area obtained by removing margins from the document page by rotating the drawing area by 90 degrees. After step S409, the processing returns to step S401. Note that, in FIG. 7, the layout 702 rotated after margin removal schematically shows the processing performed in steps S408 and S409. Note that the rotation direction may be determined according to subsequent processing such as binding, wrapping, or the like, or may be determined based on other criteria. Also, the rotated document data is arranged such that a new document data origin after the rotation coincides with the print region origin.

If it is not determined in step S402 that the focused page is a target of margin removal, the processing branches to step S408, and if it is possible to save the paper consumption by rotating the document page, the document page is rotated in step S409. In step S409, the CPU 110 arranges the document data of the focused page as a drawing region such that the document data origin coincides with the origin corresponding to the page arrangement mode. In this case, no margin is removed, and the page is not rotated. However, if the page arrangement mode is the sheet origin mode, the drawing region is arranged with reference to the sheet origin, and if the page arrangement mode is the margin mode, the drawing region is arranged with reference to the print region origin.

As described above, in the procedure shown in FIG. 4, if the margin removal setting is set and the focused page is a target of margin removal, a drawing region (colored rectangular region) obtained by excluding a margin from the focused page is arranged in a page to be printed. At this time, if the sheet origin is the reference point to be used to arrange the drawing region, a new origin is set by adding a margin to the sheet origin. The margin added may be a margin that has been set at that point in time or the minimum margin, i.e., the print margin. With this configuration, it is possible to prevent a situation in which the printed image lacks a part thereof due to no margin being set for printing. Furthermore, if the paper can be further saved by rotating the drawing region, the drawing region is rotated and then arranged. With this configuration, it is possible to further save the paper.

When print settings of the focused page are set and the page is arranged in accordance with the print settings in the procedure shown in FIG. 4, a preview image in accordance with the settings is displayed in the preview display section 202. Also, each document page subjected to the margin removal and the rotation processing and information regarding the arrangement of the document page and the like are saved and transmitted to the image output device 101 as a part of a print job together with the print setting information 300 shown in FIG. 3 in response to a print instruction. The information saved and transmitted includes the position (or the manner of arrangement) of the drawing area arranged in accordance with the mode changed in step S404 in FIG. 4, for example.

A configuration is also possible in which, in the procedure shown in FIG. 4, a preview of a focused page, which is the result of the processing, is displayed with respect to each focused page, and the processing is performed on the next page upon an instruction is given from the user to proceed to the next page in response to the display of the preview, for example.

### Print Start Position Change in Procedure shown in FIG. 4

The following describes details of the processing in which the CPU 110 changes the print start position according to setting values of the output size 305 with reference to FIGS. 5A and 5B. As a background for changing the print start position, the following describes a difference between conditions that the user require for respective types of output of the print application.

If the output is a drawing, the output size is strictly determined by each country or industry. For example, the output size of a drawing of a small house is A1 size, and the output size of a drawing of a large-scale construction is A0 size. Also, the scale of drawings is determined by standards (in Japan, JIS, etc.), and drawings are required to be drawn in an accurate scale. Therefore, the output size 305 selected when the user outputs a drawing is "the same as the document size", "half size" (reduced by 50%), or "scale" that indicates an integral multiple or an integral submultiple of the document size. Also, the document data is arranged on a sheet such that the origin of the document data coincides with the sheet origin to assure the output size relative to the document size. This state is schematically shown by a margin-removal-off layout 1 (layout 500 in FIG. 5A).

If the document data is arranged using this arrangement method, an end portion of the document data overlaps a print margin of the image output device (printer), and the overlapping portion is not output. Therefore, there is a problem in that lack of a portion of the document data occurs unless there is a margin larger than the print margin of the image output device along the periphery of the document data, but this problem does not occur in many cases because sufficiently large margins are secured in upper, lower, left, and right portions of many drawing formats.

On the other hand, if the output is a photograph, a poster, or the like, the scale is not strictly designated and it is often the case that document data does not include a margin along its periphery. Therefore, it is desirable to use an output method in which the document data is arranged inward of the print margin of the image output device on a sheet and fitted to an output size desired by the user. Therefore, if the user has selected "fitted to rolled paper" or "fitted to sheet size" as the output size 305, the document data is arranged inward of the print margin, i.e., in the print region on the sheet. In FIG. 5B, this state is schematically shown by a margin-removal-off layout 2 (layout 501).

Next, the following describes layouts after the margin removal processing. When the output size 305 is "the same as the document size", "half size", or "scale" (Yes in step S403), if a margin is removed to make the document page origin coincide with the sheet origin, there arises a problem in that an image will be cut off due to lack of a portion of the document data. This state is shown by a post-margin-removal layout 2 (layout 502) in FIG. 5A. In order to solve this problem, the print start origin of the document data is arranged inward of the print margin (arranged in the print region) on the sheet as shown by a post-margin-removal-processing layout (after the origin is moved) 504 in FIG. 5A (the processing performed in step S404).

If the output size 305 is not based on the document size, e.g., if the output size is "fitted to rolled paper" or "fitted to sheet size", the document data is arranged inward of the set print margin. Therefore, the image will not be cut off, and the origin is not moved. An example of this case is shown by a post-margin-removal-processing layout 2 (503) in FIG. 5B.

FIG. 6 shows details of the colored rectangular region obtained in step S405. A colored rectangular region 602 shows a rectangular region in which there are drawing objects 601 in document page data 600. The drawing objects 601 show letters, graphics, image data, and the like. The colored rectangular region 602 is defined as a region obtained by surrounding a region in which a drawing object appears first when the document page data 600 is scanned from an end of at least one of its upper, lower, left, and right sides. If the document page data is a dot image, for example, the scanning may be performed for each line, for example. Alternatively, if the document page data is data that defines the position of an object, it is possible to determine points that are the closest to respective sides based on the position and spread of the object. There is no drawing object outside the colored rectangular region, and accordingly, the outside of the colored rectangular region can be regarded as a margin region, and paper can be saved by removing the margin region. This method is realized by a technology similar to that shown in FIG. 6 of Japanese Patent No. 6354372, which shows an example of a position from which image formation is started by an image forming device according to a conventional technology, but it is also possible to use another method.

As described above, print data indicating the layout of document data of each page of the print target file is created, and a print job for causing the image output device to execute printing of the print data is created. The print job is transmitted from the PC 100 to the image output device 101 and executed, and printed matter in accordance with the created print data is output by the image output device 101.

As described above, according to the present embodiment, in the case where the margin removal setting is set, each document page that is to be printed is focused on, and whether or not the document page is a target of the margin removal is determined based on the type of file (determined directly from the extension). If the document page is a target of the margin removal, whether an image formation start position is set to the sheet origin or the origin of a printing allowed region is determined based on the output size of the document page. If it is determined that the image formation start position is set to the sheet origin, the image formation start position is moved to the origin of the printing allowed region. Thereafter, the document page from which a margin has been removed is arranged such that the origin of the document page coincides with the image formation start position. In this series of processing, steps S400 to S402 correspond to determination processing for determining whether or not a focused page included in processing target data is a target of margin removal. Steps S403 and S404 correspond to positioning processing for setting, with respect to the focused page that is determined as a target of the margin removal, a first reference position to be used to arrange the focused page on an output sheet to a position spaced apart from an end of the output sheet by a predetermined print margin or a position inward of that position. Also, it can be said that steps S405 to S407 correspond to arrangement processing for arranging a drawing region obtained by excluding a margin of the focused page that is determined as a target of the margin removal, using the first reference position as a reference point.

According to this processing, even if a margin is removed, it is possible to prevent a situation in which a portion of the document data is not printed due to the print margin. Also, wasting of a printing medium is suppressed and the use efficiency of the printing medium is increased by removing the margin. Furthermore, with respect to each page, whether or not the use efficiency of the printing medium increases when the page is rotated by 90 degrees is determined, and if the use efficiency increases, the document page is arranged by being rotated. For these reasons, wasting of the printing medium is suppressed and the use efficiency of the printing medium is increased.

As described above, the above embodiment can provide a margin removal function that solves the problem of missing of a part of a drawing object without changing settings for individual documents, even when documents that have output sizes corresponding to different print start origins are collectively printed.

### <Embodiment 2>

The present disclosure is not limited to the above embodiment. For example, in Embodiment 1, an example is described in which the print start origin is arranged inward of the print margin of the printer as shown by the post-margin-removal-processing layout (after the origin is moved) (504) shown in FIG. 5A. However, if there is no margin to be removed or a margin that is removed is very small, for example, it is envisioned that a part of a drawing object 601 extends to the outside of the sheet in the processing for obtaining the post-margin-removal-processing layout (after the origin is moved) (504), and printed matter lacks that part.

FIGS. 8 and 9 show a method for solving such a problem. A post-margin-removal layout 801 shown in FIG. 8 is the same as the post-margin-removal layout 701 shown in FIG. 7. That is to say, a margin included in document data has been removed, and the document data from which the margin has been removed is arranged such that the origin of the document data coincides with the print region origin. Accordingly, the document data is arranged inward of edges of the sheet by an amount corresponding to a set print margin other than the removed margin.

A post-margin-removal layout (borderless mode) 802 shows a layout obtained by changing an output mode to a borderless mode to reduce the print margin of the post-margin-removal layout 801, and moving the document data to a position inward of the reduced print margin (toward a print region). The output mode does not necessarily have to be changed to the borderless mode, and it is sufficient to change the output mode to a mode in which the amount of margin is reduced, for example.

The borderless mode is a print mode in which margins provided along the periphery of document data are removed and the document data is printed by being arranged over the entire output sheet. In the borderless mode, the document data is slightly enlarged and printed by being arranged such that the document data slightly extends to the outside of the output sheet. Accordingly, in the borderless mode, the region of the print margin that is originally a region in which no image is to be arranged and no image will be printed by the image forming device serves as a part of the print region in which the document data is printed. In the borderless mode, processing for forming an image in the print margin as well is performed. The borderless mode can be set in some models of printers but cannot be set in other models of printers, and the use of a printer that supports the borderless mode is assumed in the present embodiment.

FIG. 9 is a flowchart schematically showing the processing shown in FIG. 8. Steps that are the same as steps S400 to S409 shown in FIG. 4 are denoted by the same reference signs as those used in FIG. 4. The processing shown in FIG. 9 differs from the processing shown in FIG. 4 in that steps S901 and S902 are inserted between steps S406 and S407. Therefore, descriptions of the same processing as that shown in FIG. 4 are omitted, and steps S901 and S902 will be described.

In step S901, the CPU 110 compares a shift amount (a shift amount corresponding to the print margin) of the origin position identified in step S404 and the amount of margin identified in step S405. The amount of margin identified in step S405 has been described in more detail with reference to FIG. 6. The comparison in step S901 is performed in both the vertical direction and the horizontal direction, and if the shift amount, i.e., the print margin is larger in at least one of these directions, it is possible to determine that the print margin is larger than the amount of margin removed. If the shift amount of the origin position, i.e., the print margin is larger, the processing proceeds to step S902. If the removed margin is larger, printed matter will not lack any part of a drawing object 601, and therefore, it is not necessary to transition to the borderless mode, and the processing proceeds to step S407.

In step S902, the CPU 110 changes the print mode from a printing-with-margin mode to the borderless mode or a mode in which the amount of margin is reduced, and then proceeds to step S407.

The following describes a specific example of the processing performed in steps S901 and S902 to facilitate understanding. As an example of step S901, if the output mode of the image output device is the printing-with-margin mode and a print margin with a width of 5 mm is provided along each of the upper, lower, left, and right edges of a sheet, a drawing allowed region (the same as the printing allowed region) for the image processing device is a range from an upper left origin (a position that is shifted 5 mm rightward and 5 mm downward from an upper left corner of the sheet) to a lower right point on the sheet (a point that is 5 mm leftward from the right edge of the sheet and 5 mm upward from the lower edge of the sheet). On the other hand, assume that, in FIG. 6, a margin removed between the left edge and the drawing data has a width of 20 mm, and margins removed between the drawing data and the upper, lower, and right edges have widths of 30 mm, 80 mm, and 50 mm, respectively, for example. In this case, when the print margin and the removed upper, lower, left, and right margins are compared, all of the removed margins are larger than the print margin, and accordingly, it is determined that the drawing region will not extend to the outside of the sheet and printed matter will not lack a part of the drawing region, and the processing proceeds to step S407.

In another example, the output mode of the image output device is the printing-with-margin mode, a print margin with a width of 5 mm is provided along each of the upper, lower, left, and right edges of a sheet, a margin removed along the left edge has a width of 1 mm, and margins removed along the upper, lower, and right edges have widths of 30 mm, 0 mm, and 2 mm, respectively. In this case, when the print margin and the removed upper, lower, left, and right margins are compared, the print margin is larger than the left, lower, and right margins. If the print margin is larger in at least one direction, the printed matter may lack a part of the drawing region.

This is because, in the above example, for example, if the left side of a colored rectangular region that remains after the margins are removed is shifted 5 mm rightward from the left side of the output sheet so as to extend along the print margin, the colored rectangular region is shifted rightward by an amount that is 4 mm larger than the margin provided with a width of 1 mm along the left side before removed. Accordingly, the colored rectangular region extends 2 mm rightward beyond the right side of the output sheet although the margin with a width of 2 mm was provided along the right side of the colored rectangular region. As described above, if the print margin is secured with respect to the upper side and the left side, the print margin may not be secured with respect to the other sides. Whether or not the current case is such a case is determined in step S901. If the current case is such a case, the processing proceeds to step S902 to avoid a situation in which printed matter lacks a part of the image. In step S902, the print mode is changed to the borderless mode. In the borderless mode, the set margin is set again to 0 mm along the upper, lower, left, and right sides. Therefore, in this case, the shift amount of the origin position becomes 0 mm, and the print start position is set to the sheet origin. In the borderless mode, an image is included in the print margin, but a printer that supports the borderless mode performs printing without providing the print margin in the borderless mode.

As a result of the above, printed matter can be kept from lacking a part of the drawing region, i.e., a part of the colored rectangular region. Note that a method of slightly enlarging the drawing size is commonly used in the borderless printing mode, but the scale ratio is maintained in the present embodiment. However, the margin does not necessarily have to be set to 0 mm, and it is possible to set a minute margin having a width of 0.2 mm, for example. In this case, it is possible to avoid the occurrence of problems that derive from a sheet conveyance error (skewing of the sheet) in the image processing device.

Processing in step S407 and the following steps are the same as that described with reference to FIG. 4, and therefore, detailed descriptions thereof are omitted.

When print settings of the focused page are set and the page is arranged in accordance with the print settings in the procedure shown in FIG. 9, a preview image in accordance with the settings is displayed in the preview display section 202. Also, each document page subjected to the margin removal and the rotation processing and information regarding the arrangement of the document page and the like are saved and transmitted to the image output device 101 as a part of a print job together with the print setting information 300 shown in FIG. 3 in response to a print instruction.

As described above, the above embodiment can provide a margin removal function that can avoid the problem of missing of a part of a drawing object even when the amount of margin removed is small and securing a print margin may result in missing of a part of an image.

Note that a configuration is also possible in which whether or not the printer to be used supports the borderless printing mode is determined immediately before step S901 by referring to function information of the printer, and if the printer supports the borderless printing mode, the processing branches to step S901, otherwise the processing branches to step S407. This configuration makes it possible to use the application both in a printer that supports borderless printing and a printer that does not support borderless printing.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. A method for controlling an information processing device, the method comprising:
receiving designation of a size of an image to be output;
in a case where the designated size is a predetermined size and the image is a target of processing relating to margin removal, arranging a drawing region obtained by excluding a margin from the image, using a first position as a reference point, the first position being located inward from an end of an output sheet by an amount corresponding to a predetermined print margin; and
in a case where the designated size is the predetermined size and the image is not a target of the processing relating to margin removal, arranging the image, using a second position as a reference point, the second position being an intersection between a first side of the output sheet in a conveyance direction and a second side of the output sheet orthogonal to the first side.

2. The method for controlling an information processing device according to claim 1, the method further comprising:
receiving an instruction to enable a margin removal function; and
in a case where the margin removal function has been enabled, determining whether or not the image is a target of the processing relating to margin removal.

3. The method for controlling an information processing device according to claim 2,
wherein, in a case where the image is an image based on drawing data, it is determined that the image is a target of margin removal.

4. The method for controlling an information processing device according to claim 3,
wherein the drawing data has a file name including a predetermined string of letters.

5. The method for controlling an information processing device according to any one of claims 1 to 4,
wherein the predetermined size is a size that is set based on the size of the image.

6. The method for controlling an information processing device according to any one of claims 1 to 5,
wherein, in a case where a size different from the predetermined size has been set, the image is arranged using the first position as a reference point.

7. The method for controlling an information processing device according to any one of claims 1 to 6,
wherein, in a case where the output sheet is further saved when the drawing region is rotated by 90 degrees, the drawing region is arranged by being rotated by 90 degrees.

8. An information processing device, comprising:
reception means for receiving designation of a size of an image to be output;
first arrangement means for, in a case where the designated size is a predetermined size and the image is a target of processing relating to margin removal, arranging a drawing region obtained by excluding a margin from the image, using a first position as a reference point, the first position being located inward from an end of an output sheet by an amount corresponding to a predetermined print margin; and
second arrangement means for, in a case where the designated size is the predetermined size and the image is not a target of the processing relating to margin removal, arranging the image, using a second position as a reference point, the second position being an intersection between a first side of the output sheet in a conveyance direction and a second side of the output sheet orthogonal to the first side.

9. A computer-readable storage medium storing thereon a program which, when loaded into a computer and executed, causes the computer to execute a process, the process comprising:
receiving designation of a size of an image to be output;
in a case where the designated size is a predetermined size and the image is a target of processing relating to margin removal, arranging a drawing region obtained by excluding a margin from the image, using a first position as a reference point, the first position being located inward from an end of an output sheet by an amount corresponding to a predetermined print margin; and
in a case where the designated size is the predetermined size and the image is not a target of the processing relating to margin removal, arranging the image, using a second position as a reference point, the second position being an intersection between a first side of the output sheet in a conveyance direction and a second side of the output sheet orthogonal to the first side.
